# EUROPÄISCHE PATENTANMELDUNG

(11) **EP 0 891 833 A2**
(43) Veröffentlichungstag der Anmeldung: **20.01.1999**
(21) Anmeldenummer: 98106893.5
(22) Anmeldetag: 16.04.1998
(51) Int. Cl.: B23D 1/26

(54) **Verfahren zur Herstellung von Längsnuten**

(30) Priorität: 17.07.1997 DE 19730556
(71) Anmelder: Grüner, Stefan, 73337 Bad Überkingen (DE)
(72) Erfinder: Grüner, Stefan, 73337 Bad Überkingen (DE)
(74) Vertreter: Abel, Martin, Dipl.-Ing.

(57) **Zusammenfassung**

Es wird ein Verfahren vorgeschlagen, das es ermöglicht, wenigstens eine stirnseitig beidseits geschlossene Längsnut (14) in die eine Ausnehmung (4) begrenzende Umfangsfläche (3) einer Bauteilwandung (22) einzubringen. Hierzu wird ein mit einem Schälzahn (34) versehenes Bearbeitungswerkzeug (24) ohne Materialeingriff in die Ausnehmung (4) eingeführt und anschließend wenigstens ein Arbeitszyklus durchgeführt, im Rahmen dessen der Schälzahn (34) in axialem Abstand zur stirnseitigen Öffnung (16) der Ausnehmung (4) in Eingriff mit der Bauteilwandung (22) gebracht wird, unter Herausschälen von Material (48) aus der Bauteilwandung (22) längs der Ausnehmung (4) bewegt wird und noch axial innerhalb der Ausnehmung (4) wieder außer Eingriff mit der Bauteilwandung (22) gebracht wird.

## Beschreibung

Die Erfindung betrifft ein Verfahren zum Einbringen wenigstes einer stirnseitig beidseits geschlossenen Längsnut in die eine insbesondere zylindrische Ausnehmung begrenzende Umfangsfläche der Wandung eines Bauteiles, beispielsweise eines Bestandteils eines Servolenkgehäuses für Kraftfahrzeuge.

Im Servolenkgehäuse von Kraftfahrzeugen findet sich regelmäßig eine zylindrische Ausnehmung, in der ein Stellkolben axial verschiebbar angeordnet ist, der mit den Spurstangen der gelenkten Räder des Kraftfahrzeuges zusammenwirkt. Gesteuert durch die Lenkstange und ein Servoventil wird der Stellkolben so beaufschlagt, daß er unter Ausführung des Lenkvorganges in der Ausnehmung axial verlagert wird. Um zu verhindern, daß sich gegen Hubende des Stellkolbens ein zu hoher Druck im Hydrauliksystem aufbaut, sind bei manchen Fahrzeugen in der Nähe der axialen Endbereiche der den Stellkolben aufnehmenden Ausnehmung über den Umfang verteilte Längsnuten eingebracht, die als Überströmnuten wirken und kurzzeitig eine By-pass-Strömung am Stellkolben vorbei ermöglichen, um eine Druckentlastung herbeizuführen.

Die Herstellung der stirnseitig beidseits geschlossenen Längsnuten im Inneren der Ausnehmung erfolgt bisher durch Erodieren unter Verwendung eines mit mehreren Elektroden ausgestatteten Erodierwerkzeuges. Hier sind allerdings aufwendige Nachbearbeitungen erforderlich, um die auftretenden und an der Umfangsfläche anhaftenden Metallspritzer zu entfernen. Außerdem stellt sich durch die Hitzeentwicklung eine Gefügeänderung im Material des Bauteiles ein, die sich nachteilig auf die Festigkeit auswirken kann. Überdies sind die entstehenden Nutformen höchst unregelmäßig, was der Gewährleistung einer reproduzierbaren Qualität entgegensteht. Nicht zuletzt ist das Erodierwerkzeug sehr teuer und unterliegt einem hohen Verschleiß, so daß ein häufiger Austausch erforderlich ist.

Es ist die Aufgabe der vorliegenden Erfindung, ein Verfahren der eingangs genannten Art vorzuschlagen, das es ermöglicht, mit reduzierten Herstellkosten qualitativ hochwertigere Längsnuten einzubringen.

Zur Lösung dieser Aufgabe ist vorgesehen, daß ein mit wenigstens einer als Schälzahn zu verwendenden Eingriffspartie versehenes Bearbeitungswerkzeug von einer stirnseitigen Öffnung der Ausnehmung her ohne Materialeingriff in die Ausnehmung eingeführt wird, und daß zum Einbringen jeder Längsnut ein Schälzahn des Bearbeitungswerkzeuges in den Bereich der mit einer Längsnut zu versehenden Umfangsstelle der Umfangsfläche verbracht und dort wenigstens ein Arbeitszyklus durchgeführt wird, im Rahmen dessen der Schälzahn an der betreffenden Umfangsstelle durch zumindest radiale und axiale Relativbewegungen zwischen Bearbeitungswerkzeug und Bauteil in axialem Abstand zu der stirnseitigen Öffnung in Eingriff mit der Bauteilwandung gebracht, unter Herausschälen von Material aus der Bauteilwandung längs der Ausnehmung bewegt und noch axial innerhalb der Ausnehmung wieder außer Eingriff mit der Bauteilwandung gebracht wird.

Auf diese Weise ist es möglich, die Längsnuten im Rahmen verhältnismäßig einfach beherrschbarer mechanischer Arbeitsvorgänge einzubringen, obwohl sie stirnseitig geschlossen sind. Bei jedem Arbeitszyklus - je nach gewünschter Nuttiefe und/oder Nutgestalt kann es sich dabei um einen oder mehrere Arbeitszyklen handeln - wird Material aus der regelmäßig aus Metall bestehenden Bauteilwandung herausgeschält, indem ein Schälzahn des Bearbeitungswerkzeuges in geeigneter Weise mit der Bauteilwandung in Eingriff gebracht wird. Dabei ist eine reproduzierbare und exakte Formgebung der Längsnuten möglich und es lassen sich ohne großen Aufwand und beispielsweise allein durch Änderung der Steuerungssoftware der zugeordneten Bearbeitungsmaschine mit häufig ein und demselben Werkzeug unterschiedliche Formgebungen realisieren. So ist beispielsweise ohne Probleme eine Variation der Länge und/oder der Nuttiefe über den Verlauf der Länge möglich. Da der Werkstoff thermisch nur gering beansprucht wird, treten auch keine sich nachteilig auf die Festigkeit auswirkenden Gefügeänderungen auf. Nachfolgende Schleif- oder Bürstarbeiten zur Reinigung der Umfangsfläche im Bereich der eingebrachten Längsnuten können ebenfalls in aller Regel entfallen. Im Verhältnis zum Stand der Technik ist das erfindungsgemäße Verfahren wesentlich kostengünstiger und genauer und erlaubt somit eine beträchtliche Reduzierung der Herstellkosten der bearbeiteten Bauteile.

Vorteilhafte Weiterbildungen der Erfindung gehen aus den Unteransprüchen hervor.

Sollen in der die Ausnehmung begrenzenden Umfangsfläche der Bauteilwandung mehrere in Umfangsrichtung verteilt angeordnete Längsnuten eingebracht werden, wird zwischen der Einbringung der einzelnen Längsnuten zweckmäßigerweise eine relative Positionierbewegung zwischen Bearbeitungswerkzeug und Bauteil ausgeführt, um einen Schälzahn des Bearbeitungswerkzeuges in einer neuen Schälposition zu positionieren, in der er derjenigen Umfangsstelle zugeordnet ist, an der eine weitere Längsnut aus der Bauteilwandung herausgearbeitet werden soll. Die Positionierbewegung findet dabei vorteilhafterweise statt, ohne den Schälzahn zwischenzeitlich durch entsprechende Verlagerung des Bearbeitungswerkzeuges aus der Ausnehmung herauszuholen. Dies verspricht kurze Verfahrwege mit entsprechend hoher Bearbeitungsgeschwindigkeit.

Bei der Positionierbewegung zwischen zwei Schälpositionen findet zweckmäßigerweise eine relative Drehbewegung zwischen dem Bearbeitungswerkzeug und dem Bauteil bezüglich einer Positionierachse statt, die in Längsrichtung der Ausnehmung verläuft, also mit der Längsachse der Ausnehmung zusammenfällt oder parallel zu dieser angeordnet ist. Vor allem dann, wenn die Positionierbewegung durch Verdrehen des Bearbeitungswerkzeuges erfolgt, wählt man als Positionierachse zweckmäßigerweise die Längsachse des Bearbeitungswerkzeuges.

Vorzugsweise umfaßt die Positionierbewegung zusätzlich zu der relativen Drehbewegung auch eine bezüglich der Längsrichtung der Ausnehmung querverlaufende relative Querbewegung zwischen Bearbeitungswerkzeug und Bauteil. Dabei können sich die Drehbewegung und die Querbewegung entsprechend der technischen Ausstattung der zugehörigen Bearbeitungsmaschine überlagern. Man wird die relative Positionierbewegung insbesondere derart ausführen, daß die jeweils eingenommenen Schälpositionen im Bereich der mit einer Längsnut zu versehenenden Umfangsstellen auf einem Kreisbogen liegen, dessen Zentrum mit der Längsachse der Ausnehmung zusammenfällt. Dabei kann sich das Bearbeitungswerkzeug ähnlich einer Planetenbewegung um die Längsachse der Ausnehmung herum relativ zum Bauteil verlagern.

Letzteres ist insbesondere auch dann von Vorteil, wenn das Bearbeitungswerkzeug über mehrere nebeneinanderliegend auf einer insbesondere zu einem Kreis geschlossenen Bogenlinie angeordnete Schälzähne verfügt, wobei der Radius der Bogenlinie geringer ist als der Radius der Ausnehmung, so daß bei Herstellung einer Längsnut unter Verwendung eines Schälzahnes gleichzeitig wenigstens ein benachbarter Schälzahn an einer ebenfalls mit einer Längsnut auszustattenden Umfangsstelle mit der Bauteilwandung in Eingriff gelangt, wobei allerdings die Eingriffstiefe weniger gering ist, so daß lediglich ein Vorschälvorgang abläuft. Dieser hat jedoch zur Folge, daß der anschließend im Bereich der vorgeschälten Längsnut in die Schälposition gebrachte Schälzahn mit weniger Aufwand in der Lage ist, die vorgeschälte Längsnut fertigzustellen. Insbesondere ist die Fertigstellung mit einer geringeren Belastung des Schälzahnes und/oder einer geringeren Anzahl von Arbeitszyklen verbunden.

Es versteht sich, daß eine Mehrfachanordnung von Längsnuten auch unter Verwendung eines Bearbeitungswerkzeuges erstellt werden kann, das über nur einen Schälzahn verfügt. Auch hier werden nach Fertigstellung jeder Längsnut das Bearbeitungswerkzeug und das Bauteil relativ zueinander so positioniert, daß der einzige Schälzahn eine neue Schälposition im Bereich einer anderen Umfangsstelle einnimmt, an der ebenfalls eine Längsnut eingebracht werden soll. Ein mit mehreren Schälzähnen ausgestattetes Bearbeitungswerkzeug hat allerdings den Vorteil, daß zur Herstellung der verschiedenen Längsnuten unterschiedliche Schälzähne zum Einsatz kommen können, was die Standzeit des Bearbeitungswerkzeuges erhöht. Auch könnten hierbei wenigstens zwei Schälzähne vorgesehen sein, deren Schneidenorientierung axial entgegengesetzt ist, um sowohl einen stoßenden als auch einen ziehenden Schälvorgang mit dem gleichen Bearbeitungswerkzeug durchführen zu können.

Zweckmäßigerweise führt man die zwischen dem Bearbeitungswerkzeug und dem Bauteil ablaufenden Relativbewegungen wenigstens während der Arbeitszyklen durch alleinige Bewegung des Bearbeitungswerkzeuges aus. Im Prinzip wäre es jedoch ohne weiteres möglich, die Relativbewegungen allein durch Bewegung des Bauteiles oder durch kombinierte Bewegung sowohl des Bearbeitungswerkzeuges als auch des Bauteiles zu realisieren.

Nachfolgend wird die Erfindung anhand der beiliegenden Zeichnung näher erläutert. Es zeigen im einzelnen:
- Figur 1: in schematischer Darstellung und teilweise im Längsschnitt ein von einem Servolenkgehäuse gebildetes Bauteil, das in einer Ausnehmung über stirnseitig beidenends geschlossene Längsnuten verfügt, die mit dem erfindungsgemäßen Verfahren hergstellt werden können, und
- Figuren 2 bis 8: verschiedene Phasen eines bevorzugten Ablaufes des erfindungsgemäßen Verfahrens, wobei

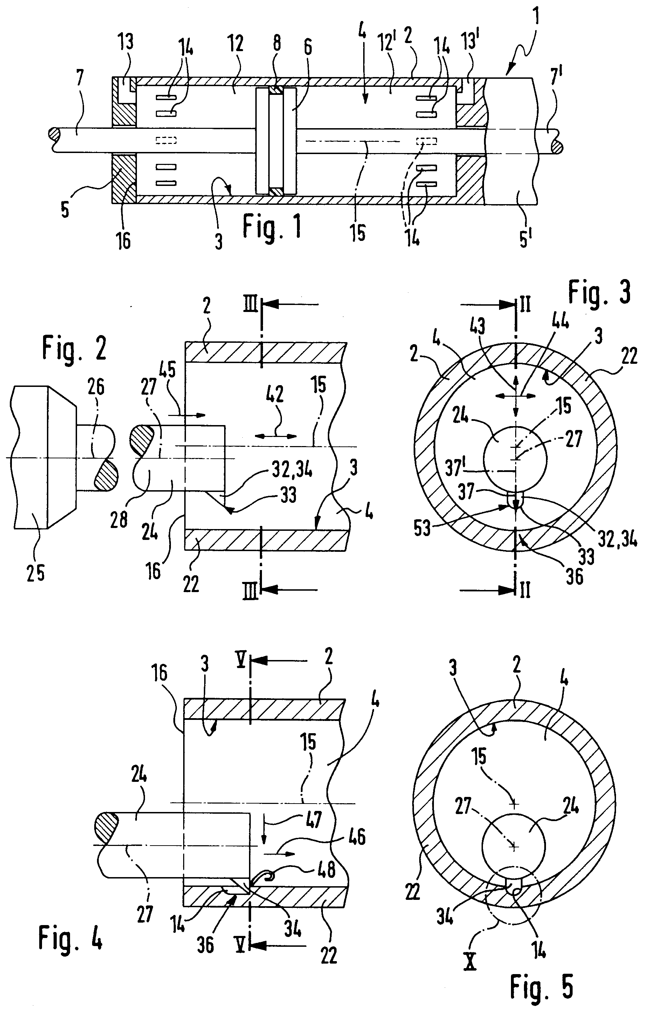

- Figur 2: einen stirnseitigen Endabschnitt des mit Längsnuten zu versehenden Bauteiles im Längsschnitt gemäß Schnittlinie II-II aus Figur 3 bei axial einfahrendem Bearbeitungswerkzeug zeigt,
- Figur 3: einen Querschnitt durch die Anordnung aus Figur 2 gemäß Schnittlinie III-III ist,
- Figur 4: in einer der Figur 2 entsprechenden Darstellungsweise eine Momentaufnahme eines Arbeitszyklus zeigt,
- Figur 5: einen Querschnitt durch die in Figur 4 gezeigte Verfahrensphase gemäß Schnittlinie V-V zeigt,

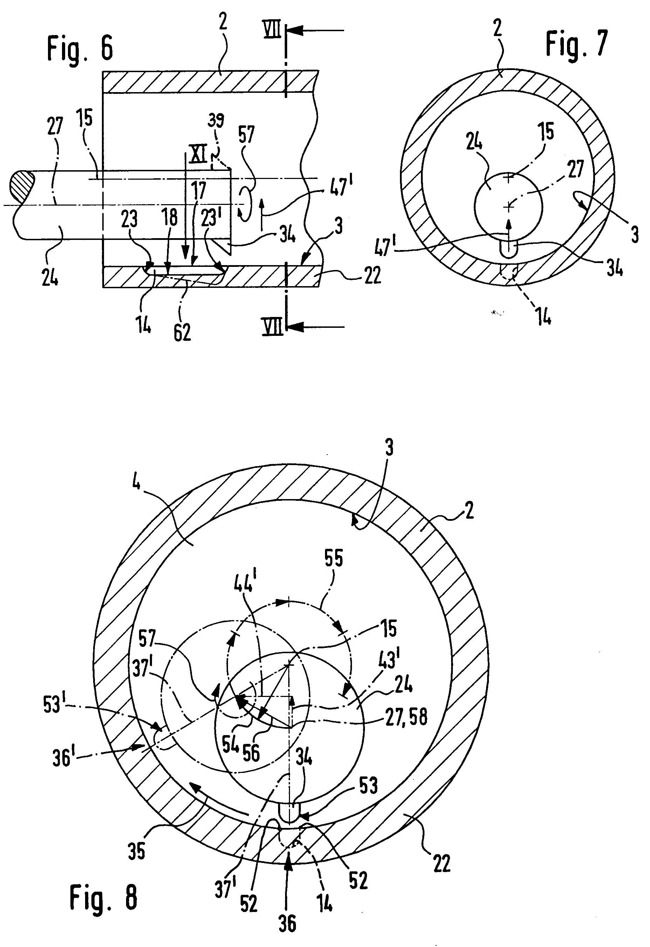

- Figur 6: in einer der Figuren 2 und 4 entsprechenden Darstellungsweise einen Zustand zeigt, bei dem das Bearbeitungswerkzeug nach Durchführung eines Arbeitszyklus außer Eingriff mit der Bauteilwandung steht,
- Figur 7: einen Querschnitt gemäß Schnittlinie VII-VII aus Figur 6 darstellt, und
- Figur 8: eine vergrößerte Darstellung der Figur 7 zeigt, wobei strichpunktiert eine mögliche Positionierbewegung dargestellt ist, um den Schälzahn des Bearbeitungswerkzeuges im Anschluß an die Erstellung einer Längsnut in eine weitere Schälposition zum Herstellen einer weiteren Längsnut zu verbringen.

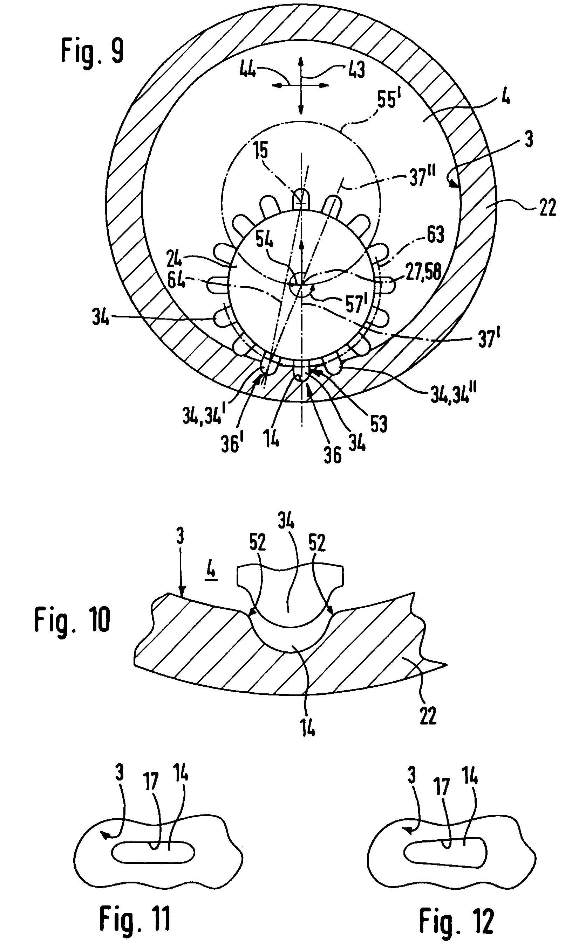

Ferner zeigen
- Figur 9: in einer der Figur 8 entsprechenden Darstellungsweise eine weitere Möglichkeit zur Durchführung des erfindungsgemäßen Verfahrens unter Verwendung eines mit mehreren Schälzähnen ausgestatteten Bearbeitungswerkzeuges,
- Figur 10: den in Figur 5 markierten Ausschnitt X in vergrößerter Darstellung bei außer Eingriff mit dem Bauteil stehendem Schälzahn, und
- Figuren 11 und 12: verschiedene mit dem Verfahren realisierbare Formgebungen der in der Umfangsfläche liegenden Nutöffnung in Draufsicht auf die Umfangsfläche mit Blickrichtung gemäß Pfeil XI aus Figur 6.

Die Figur 1 zeigt schematisch einen Teil eines Servolenkgehäuses 1, das bei Kraftfahrzeugen zum Einsatz gelangt. Es umfaßt einen nachfolgend nurmehr einfach als Bauteil 2 bezeichneten hohlzylindrischen Bestandteil, dessen innenliegende zylindrische Umfangsfläche 3 eine zylindrische Ausnehmung 4 begrenzt. Axial beidseits ist das die Ausnehmung 4 aufweisende Bauteil 2 durch Abschlußwände 5,5' verschlossen.

Die Ausnehmung 4 bildet eine Laufbohrung für einen darin angeordneten, axial verschiebbaren Stellkolben 6, von dem nach entgegengesetzten Axialrichtungen zwei Betätigungsstangen 7,7' ausgehen, die die zugeordnete Abschlußwand 5,5' durchsetzen und auf nicht näher gezeigte Weise mit einer Spurstange einer Fahrzeuglenkung in Verbindung stehen.

Der Stellkolben 6 trägt umfangsseitig eine ringförmige Dichtung 8 und unterteilt somit die Ausnehmung 4 axial in zwei Arbeitsräume 12,12', in die jeweils ein Fluidkanal 13,13' mündet. Diese Fluidkanäle 13,13' führen zu einem Servoventil, das entsprechend dem Lenkradeinschlag betätigt wird und die Zufuhr und Abfuhr von Hydrauliköl bezüglich der Arbeitsräume 12,12' steuert.

Gelangt der Stellkolben 6 im Betrieb der Lenkung in eine seiner Endlagen im Bereich der Abschlußwände 5,5', so hat ein weiterer Lenkeinschlag die volle Betriebsleistung der angeschlossenen Hydraulikpumpe zur Folge, ohne daß sich der Stellkolben 6 weiter bewegen könnte. Daher sind zur Druckentlastung an den stirnseitigen Endbereichen der Ausnehmung 4 jeweils mehrere Längsnuten 14 in die Umfangsfläche 3 eingebracht. Beim Ausführungsbeispiel handelt es sich um zwei Gruppen von Längsnuten 14, wobei die Längsnuten 14 einer jeweiligen Gruppe über den Umfang der Ausnehmung 4 mit insbesondere gleichem Abstand verteilt vorgesehen sind. Man könnte von einem Nutenkranz sprechen. Die Längsnuten 14 haben eine Längserstreckung mit wenigstens einer parallel zur Längsachse 15 der Ausnehmung 4 verlaufenden Richtungskomponente, wobei sie zweckmäßigerweise exakt parallel zur dieser Längsachse 15 verlaufen, wie dies aus Figur 1 hervorgeht. Läuft der Stellkolben 6 in seine Endlage, wirken die dort befindlichen Längsnuten 14 als Überströmkanäle, die die Dichtung 8 überbrücken, so daß Druckmedium überströmen kann und der Druck reduziert wird.

Nachfolgend werden verschiedene Varianten eines Verfahrens beschrieben, mit dem die Längsnuten 14 in die die Ausnehmung 4 umfangsseitig begrenzende Umfangsfläche 3 durch eine stirnseitige Öffnung 16 des Bauteiles 2 hindurch eingebracht werden können. Diese stirnseitige Öffnung 16 liegt vor, wenn im Falle des Ausführungsbeispiels der Figur 1 eine der Abschlußwände 5 entfernt ist. Die Figuren 2, 4 und 6 zeigen jeweils einen axialen Endabschnitt des Bauteiles 2 bei entfernter Abschlußwand 5 und somit zugänglicher stirnseitiger Öffnung 16.

Es sei darauf verwiesen, daß das Verfahren die Einbringung von Längsnuten in jedwedes Bauteil 2 ermöglicht, das über eine insbesondere zylindrische Ausnehmung 4 verfügt, die über wenigstens eine stirnseitige Öffnung 16 für ein Bearbeitungswerkzeug zugänglich ist.

Die herzustellenden Längsnuten 14 sind, wie auch aus Figur 6 hervorgeht, Oberflächennuten, die über eine in der Umfangsfläche 3 liegende längliche Nutöffnung 17 zur Ausnehmung 4 hin offen und im übrigen geschlossen sind. Ihr Nutgrund 18 liegt tiefer als die Nutöffnung 17 im Inneren der die Ausnehmung 4 umgebenden Bauteilwandung 22. Darüberhinaus sind die Längsnuten 14 sowohl längsseits als auch stirnseitig an beiden Seiten geschlossen. Die stirnseitigen Begrenzungswände sind in Figur 6 bei 23,23' markiert. Die Längsnuten 14 haben somit die Gestalt länglicher taschenartiger Vertiefungen.

Um die Längsnuten 14 einzubringen, wird das Bauteil 2 an einer nicht näher dargestellten Spannvorrichtung einer Bearbeitungsmaschine festgelegt. Zum Einbringen der Längsnuten 14 wird ein Bearbeitungswerkzeug 24 verwendet, das in einer Werkzeugaufnahme 25 der Bearbeitungsmaschine festlegbar ist, die sich unter anderem zu einer Drehbewegung um eine Antriebsachse 26 antreiben läßt.

Die Ausrichtung der Anordnung erfolgt zweckmäßigerweise horizontal, also derart, daß sowohl die Längsachse 15 der Ausnehmung 4 als auch die Antriebsachse 26 sowie die Längsachse 27 des daran gespannten Bearbeitungswerkzeuges 24 horizontal und zweckmäßigerweise gleichzeitig parallel zueinander verlaufen. Es ist ein Vorteil, daß das Verfahren problemlos auch auf Horizontalmaschinen ausgeführt werden kann.

Das vorzugsweise verwendete Bearbeitungswerkzeug 24 verfügt über einen länglichen Schaft 28, der insbesondere stangenförmig ausgebildet ist und im Bereich seiner Rückseite im Spannfutter 25 eingespannt ist. Im Bereich des entgegengesetzten freien Endes trägt er insbesondere im Bereich seines Außenumfanges eine oder mehrere, bezüglich der Längsachse 27 radial nach außen ragende und über den Außenumfang des Schaftes 28 vorstehende Eingriffspartien 32. Sie sind jeweils mit einer Schneide 33 versehen, mit der sie in Eingriff mit dem Bauteil 2 bringbar sind, um die Längsnuten 14 herauszuarbeiten. Da dieser Prozess des Herausarbeitens der Längsnuten 14 bei dem erfindungsgemäßen Verfahren mit einem Schälprozess vergleichbar ist, seien die zahnähnlich vorspringenden Eingriffspartien 32 als Schälzähne 34 bezeichnet.

Nachfolgend wird zunächst anhand der Figuren 2 bis 8 ein bevorzugter Verfahrensablauf erläutert, mit dem sich an mehreren in Umfangsrichtung 35 der Umfangsfläche 3 versetzt bzw. beabstandet zueinander angeordneten Umfangsstellen 36,36' einzelne Längsnuten 14 einbringen lassen. Zur Anwendung gelangt dabei ein Bearbeitungswerkzeug 24, das über lediglich einen bezüglich der Längsachse 27 Quererstreckung aufweisenden Schälzahn 34 verfügt. Erläutert wird das Einbringen einer Gruppe von Längsnuten 14 in der Nähe der stirnseitigen Öffnung 16, wobei zu betonen ist, daß sich auch axial tiefer in der Ausnehmung 4 ohne Probleme derartige Längsnuten 14 einbringen lassen, insbesondere solche, die sich gemäß Figur 1 im Bereich des axial entgegengesetzten Endes der Ausnehmung 4 befinden. Es ist lediglich der Schaft 28 des Bearbeitungswerkzeuges 24 mit ausreichender Länge auszuführen und im Bereich des Spannfutters 25 für eine ausreichend steife Einspannung zu sorgen, die den auftretenden hohen Querkräften gewachsen ist.

Der Schälzahn 34 steht in einer durch einen Pfeil angedeuteten, rechtwinklig zur Längsachse 27 verlaufenden Schältiefenrichtung 37 über die umfangsseitig benachbarten Abschnitte des Bearbeitungswerkzeuges 24 vor. Sein Konturverlauf im Bereich der Schneide 33 entspricht zumindest in etwa der Querschnittsform der herzustellenden Längsnut 14.

Der Bearbeitungsvorgang beginnt, wenn das Bauteil 2 in einer dafür vorgesehenen Spannvorrichtung und das Bearbeitungswerkzeug 24 im zugeordneten Spannfutter 25 gespannt ist. Über das drehangetriebene Spannfutter 25 läßt sich das Bearbeitungswerkzeug 24 zu einer Drehbewegung um die Antriebsachse 26 antreiben und dabei auch in beliebigen Winkelstellungen drehfest positionieren.

Zwischen dem Bearbeitungswerkzeug 24 und dem Bauteil 2 sind ferner relative Verlagerungsbewegungen in wenigstens drei rechtwinkelig zueinander verlaufenden Achsrichtungen möglich, wobei diese Bewegungen wie auch die Dreh-Positionierbewegung um die Antriebsachse 26 auch beliebig überlagert ausgeführt werden können. Bei den drei Relativbewegungen handelt es sich um eine relative Axialbewegung 42 in einer zu den Längsachsen 15,27 parallel verlaufenden Richtung, sowie um zwei hierzu und mit Bezug zueinander rechtwinkelig verlaufende erste und zweite relative Querbewegungen 43,44. Sämtliche zur Durchführung des Verfahrens erforderlichen Relativbewegungen werden beim Ausführungsbeispiel durch Bewegung des Bearbeitungswerkzeuges 24 relativ zum stillstehenden Bauteil 2 ausgeführt, obwohl es auch möglich wäre, die Relativbewegungen durch aufeinander abgestimmte Bewegung beider Teile oder auch nur des Bauteiles 2 zu realisieren. Vor allem die relative Axialbewegung zur Erzeugung der Vorschubbewegung könnte auch durch axiale Verlagerung des Bauteiles 2 relativ zu dem axial stillstehenden Bearbeitungswerkzeug 24 erzeugt werden.

Zu Beginn des Verfahrens befindet sich das Bearbeitungswerkzeug 24 außerhalb der Ausnehmung 4. Ausgehend von dieser Grundstellung wird das Bearbeitungswerkzeug 24 von der stirnseitigen Öffnung 16 her durch diese hindurch mit dem Schälzahn 34 in die Ausnehmung 4 eingeführt, wobei das Einführen des Schälzahnes 34 in die Ausnehmung 4 ohne Materialeingriff erfolgt, so daß die Ausnehmung 4 im Bereich der stirnseitigen Öffnung 16 ihre Kontur unverändert beibehält und keine zur Stirnseite hin offene Nut entsteht. Das axiale Einführen erfolgt gemäß Pfeil 45 in Richtung der axialen Relativbewegung 42, wobei allerdings zu Positionierzwecken auch schon bei diesem Einfahren überlagerte relative Querbewegungen oder Drehbewegungen des Bearbeitungswerkzeuges 24 durchaus durchgeführt werden könnten.

Das Bearbeitungswerkzeug 24 wird beim oder nach dem Einführen in die Ausnehmung 4 im Bereich der Umfangsstelle 36, an der eine Längsnut 14 eingebracht werden soll, in einer aus Figur 3 hervorgehenden Schälposition 53 positioniert. Zweckmäßigerweise ist dabei die Ausrichtung des Bearbeitungswerkzeuges 24 so getroffen, daß die Achse 37' der Schältiefenrichtung 37 rechtwinkelig zu dem an der Umfangsstelle 36 befindlichen Flächenabschnitt der Umfangsfläche 3 verläuft.

Anschließend wird ein Arbeitszyklus durchgeführt, im Rahmen dessen der Schälzahn 34 an der betreffenden Umfangsstelle 36 durch eine axiale Vorschubbewegung 46 und eine dieser überlagerte, in Schnittiefenrichtung 37 verlaufende radiale Zustellbewegung 47 in Eingriff mit der Bauteilwandung 22 gebracht und bei der axialen Vorschubbewegung 46 Material 48 aus der Bauteilwandung 22 herausgeschält wird. Ist der Schälzahn 34 über eine der gewünschten Nutlänge im wesentlichen entsprechende Strecke längs der Ausnehmung 4 verlagert, fährt man den Schälzahn 34 wieder parallel zur Achse 37' der Schältiefenrichtung 37 aus der Bauteilwandung 22 aus, wobei die entsprechende radiale Ausfahrbewegung 47' in Figur 6 angedeutet ist.

Sowohl das In-Eingriff-bringen als auch das Außer-Eingriff-bringen des Schälzahnes 34 bezüglich der Bauteilwandung 22 erfolgt innerhalb der Ausnehmung 4 mit Abstand zu dessen stirnseitigen Endbereichen, so daß es sich bei der Längsnut 14 um eine taschenähnliche Längsvertiefung handelt, die lediglich über die schon erwähnte Nutöffnung 17 an der Umfangsfläche 3 zur Ausnehmung 4 hin offen ist und im übrigen allseits durch die Bauteilwandung 22 begrenzt ist.

Es ist möglich, die Längsnut 14 im Rahmen eines einzigen Arbeitszyklus der beschriebenen Art einzubringen. Möglich ist es aber auch, das Herausschälen der Längsnut 14 durch mehrmaliges und insbesondere unmittelbar aufeinanderfolgendes Durchführen eines Arbeitszyklus zu realisieren. Dies vor allem dann, wenn eine Längsnut 14 hergestellt werden soll, die radial sehr tief ist und/oder die über eine relativ komplizierte Formgebung verfügt.

Wie aus Figur 10 hervorgeht, kann man die Querschnittskontur des verwendeten Schälzahnes 34 so wählen, daß beim Schälvorgang gleichzeitig die Längskanten 52 der hergestellten Längsnut 14 im Übergangsbereich zur Umfangsfläche 3 gebrochen werden. Man kann hierzu einen Schälzahn 34 verwenden, der in dem Bereich der Längskanten 52 über im Querschnitt konkave Abrundungen verfügt, die im Bereich der Längskanten 52 im Querschnitt konvex geformte Übergangsbereiche zwischen der Wandung der Längsnut 14 und der Umfangsfläche 3 der Ausnehmung 4 hervorrufen.

Ist nur eine Längsnut 14 gewünscht, kann das Bearbeitungswerkzeug 24 nach deren Fertigstellung wieder aus der Ausnehmung 4 entfernt werden. In aller Regel ist es jedoch erforderlich, eine Mehrzahl von Längsnuten 14 herzustellen, die sich gemäß der schon geschilderten Weise an in Umfangsrichtung 35 versetzt zueinander angeordneten unterschiedlichen Umfangsstellen befinden. In einem solchen Falle bleibt das Bearbeitungswerkzeug 24 mit seinem Schälzahn 34 zweckmäßigerweise solange innerhalb der Ausnehmung 4, bis alle Längsnuten 14 herausgeschält worden sind. Es wird lediglich das Bearbeitungswerkzeug 24 nach Fertigstellung jeder Längsnut 14 so umpositioniert, daß sich der Schälzahn 34 in einer in Figur 8 strichpunktiert angedeuteten neuen Schälposition 53' befindet, in der er mit radialer Ausrichtung derjenigen Umfangsstelle 36' gegenüberliegt, an der eine weitere Längsnut 14 aus der Bauteilwandung 22 herauszuschälen ist. Nach dieser Positionierung wird der geschilderte Arbeitszyklus bezüglich der neuen Umfangsstelle 36' in einer erforderlichen Anzahl durchgeführt.

Diese Vorgänge wiederholen sich so oft, bis an allen gewünschten Umfangsstellen der Umfangsfläche 3 eine Längsnut eingebracht ist (die weiteren Längsnuten sind in Figur 8 nicht dargestellt).

Die Umpositionierung des Bearbeitungswerkzeuges 24 zwischen den einzelnen Schälpositionen 53,53' sei als relative Positionierbewegung bezeichnet, die in Figur 8 durch Pfeil 54 verdeutlicht ist. Zweckmäßigerweise durchläuft das Bearbeitungswerkzeug 24 bei der Positionierung in den einzelnen Schälpositionen ein in Figur 8 strichpunktiert angedeutete, von einem Kreisbogen 55 gebildete Mantellinie, deren Zentrum mit der Längsachse 27 der Ausnehmung 4 zusammenfällt. Es findet somit bei der Herstellung eines Kranzes von in Umfangsrichtung auf einer Kreislinie verteilt angeordneten Längsnuten 14 eine taktweise Durchführung der relativen Positionierbewegungen 54 statt, zwischen denen jeweils die Arbeitszyklen ablaufen.

Die relative Positionierungbewegung 54 zum Positionieren in einer neuen Schälposition erfolgt beim Ausführungsbeispiel in der aus Figur 8 hervorgehenden Art und Weise. Demnach führt das Bearbeitungswerkzeug 24 sowohl eine bezüglich in Längsachsen 15,27 quergerichtete Verlagerungsbewegung 56 als auch eine Drehbewegung 57 um seine Längsachse 27 aus. Auf diese Weise liegt das Bearbeitungswerkzeug 24 der neuen Umfangsstelle 36 derart gegenüber, daß die Achse 37' der Schältiefenrichtung 37 des Schälzahnes 34 rechtwinkelig zur Umfangsfläche 3 an der Umfangsstelle 36' ausgerichtet ist. Bezüglich der Drehbewegung 57 bildet also die Längsachse 27 des Bearbeitungswerkzeuges 24 selbst eine Positionierachse 58, um die das Bearbeitungswerkzeug verdreht wird. Die quergerichtete Verlagerungsbewegung 56 setzt sich aus überlagerten Bewegungen der oben erwähnten ersten und zweiten relativen Querbewegungen zusammen, die durch Pfeile 43',44' nochmals angedeutet sind.

Die Art und Weise, in welcher Abfolge und mit welcher Überlagerung die Teilbewegungen der Positionierbewegung stattfinden, hängt auch maßgeblich von den Möglichkeiten der verwendeten Bearbeitungsmaschine ab.

Bei dem beschriebenen Verfahrensbeispiel ist ferner vorgesehen, daß die axiale Vorschubrichtung der beim Schälprozess ablaufenden Vorschubbewegung 46 so gewählt ist, daß das Bearbeitungswerkzeug 24 und der Schälzahn 34 eine stoßende Bewegung ausführen. Die Vorschubbewegung ist also von der Einspannseite des Bearbeitungswerkzeuges 24 und der vom Bearbeitungswerkzeug durchsetzten stirnseitigen Öffnung 16 axial weggerichtet und die Einleitung der Vorschubkraft erfolgt auf der entgegen der Vorschubrichtung 46 weisenden Axialseite des Schälzahnes 14. Dementsprechend ist der Schälzahn 34 zweckmäßigerweise so ausgebildet, daß seine Schneide 33 wenigstens teilweise in Vorschubrichtung 46 orientiert ist und bei der axialen Verlagerung des Bearbeitungswerkzeuges 24 in Schäleingriff gelangen kann. Der dabei stattfindende Schälvorgang während der axialen Vorschubbewegung 46 ist dabei vergleichbar dem sogenannten Stoßen.

Als alternative Verfahrensweise wäre allerdings auch denkbar, den Schälvorgang durch ein ziehendes Verlagern des Schälzahnes 34 hervorzurufen. Hierzu wäre beispielsweise lediglich ein Bearbeitungswerkzeug zu verwenden, bei dem die Schneide 33 des Schälzahnes 34 eine entgegengesetzte axiale Orientierung hat, so daß man durch Ziehen am Schaft 28 den Schälvorgang ausführt (in Figur 6 bei 39 strichpunktiert angedeutet). Hierbei wäre dann zweckmäßigerweise die axiale Vorschubbewegung entgegen derjenigen beim Stoßen gerichtet und der Ansatzpunkt, an dem der Schälzahn in Materialeingriff gelangt, läge bezüglich der stirnseitigen Öffnung 16, durch die das Bearbeitungswerkzeug 24 eingeführt wird weiter entfernt und tiefer in der Ausnehmung 3 als der Austrittspunkt am Ende der herausgeschälten Längsnut. Die Einleitung der Zugkraft würde dabei in der Regel auf der in Vorschubrichtung weisenden Axialseite des Schälzahnes erfolgen.

Es wäre auch denkbar, ein Bearbeitungswerkzeug zu verwenden, das mit wenigstens zwei Schälzähnen versehen ist, deren Schneiden axial entgegengesetzt orientiert sind. Auf diese Weise ließe sich mit ein und demselben Werkzeug sowohl ein stoßender als auch ein ziehender Schälvorgang durchführen. Man könnte die Längsnuten zur Zeiteinsparung sogar durch abwechselnde stoßende und ziehende Bearbeitung herausschälen, um die Anzahl der Leerhübe zu reduzieren.

Es ist ohne weiteres möglich, während eines Arbeitszyklus durch aufeinander abgestimmte und überlagerte Durchführung axialer und radialer Relativbewegungen zwischen Bearbeitungswerkzeug 24 und Bauteil 2 besondere Formgebungen der jeweils herauszuschäldenden Längsnut 14 zu verwirklichen. So kann man beispielsweise über die Nutlänge hinweg unterschiedliche Nuttiefen und/oder unterschiedliche Nutquerschnitte realisieren. In Figur 6 ist beispielhaft strichpunktiert bei 62 der Nutgrund einer Längsnut angedeutet, die mit zunehmendem Abstand von der stirnseitigen Öffnung 16 allmählich tiefer wird. Auch eine Tiefenabstufung wäre möglich.

In entsprechender Weise kann man auch über die Nutlänge hinweg eine sich ändernde Breite der Nutöffnung 17 vorsehen, wobei die Figur 12 eine Nutöffnung 17 mit in Längsrichtung tropfenähnlichem oder keilähnlichem Umriss zeigt. Im Vergleich dazu ist in Figur 11 eine Längsnut 14 abgebildet, die über ihre Länge eine zumindest annähernd konstante Breite hat. Vorteilhafterweise lassen sich die unterschiedlichen Nutkonturen häufig mit ein und demselben Bearbeitungswerkzeug allein dadurch realisieren, daß man die Relativbewegungen zwischen Bearbeitungswerkzeug 24 und Bauteil 2 verändert, was in der Regel lediglich einer Änderung des Steuerungsprogrammes bedarf.

Aus Figur 9 geht ein alternatives Verfahrensbeispiel hervor, das ebenfalls die Einbringung mehrerer über den Umfang der Ausnehmung 4 verteilter Längsnuten ermöglicht. Verwendet wird hierbei wiederum ein Bearbeitungswerkzeug 24, dessen in die Ausnehmung 4 eintauchender Abschnitt wesentlich geringere Querabmessungen als die Ausnehmung 4 selbst aufweist. Im Gegensatz zum bisher beschriebenen Ausführungsbeispiel kommt allerdings ein Bearbeitungswerkzeug 24 zum Einsatz, das im Bereich seines Außenumfanges über eine Mehrzahl von Schälzähnen 34 verfügt, die entlang einer Bogenlinie 63 verteilt angeordnet sind, deren Zentrum zweckmäßigerweise auf der Längsachse 27 liegt. Zudem ist der Radius der Bogenlinie 63 zweckmäßigerweise geringer als derjenige der Ausnehmung 4.

Die Anzahl der Schälzähne 34 stimmt beim Ausführungsbeispiel mit der Anzahl der an der entsprechenden Axialposition entlang des Umfanges der Ausnehmung 4 einzubringenden Längsnuten 14 überein. Es ist von Vorteil, wenn die Schälzähne 34 mit gleicher Teilung auf einer zu einem Kreis geschlossenen Bogenlinie 63 liegen, so daß wie abgebildet ein Schälzahnkranz vorliegt. Das Bearbeitungswerkzeug könnte auch als Schälrad bezeichnet werden.

Bei der Durchführung des Verfahrens wird zunächst wiederum das Bearbeitungswerkzeug 24 mit allen Schälzähnen 34 in die Ausnehmung 4 eingeführt und so positioniert, daß einer der Schälzähne 34 die Schälposition 53 einnimmt. Anschließend finden ein oder mehrere Arbeitszyklen statt, im Rahmen derer das Bearbeitungswerkzeug 24 in der oben schon beschriebenen Art und Weise bewegt wird, wobei der betreffende Schälzahn 34 eine Längsnut 14 aus der Bauteilwandung 22 herausschält.

Während dieses Herausschälens der Längsnut 14 gelangen gleichzeitig auch die beiden den Schälzahn 34 in Richtung der Bogenlinie 63 beidseits flankierenden Schälzähne 34',34'' in Eingriff mit der Bauteilwandung 22 und führen einen Schälvorgang durch. Aufgrund des geringeren Radius der Bogenlinie 63 und der identischen Ausbildung sämtlicher Schälzähne 34 ergibt sich jedoch, daß die benachbarten Schälzähne 34',34'' nicht mit der gleichen Eindringtiefe in die Bauteilwandung 22 eingreifen. Die von ihnen ausgeführten Schälvorgänge sind somit lediglich Vorschälvorgänge, im Rahmen derer keine fertigen Längsnuten 14 ausgenommen werden. Allerdings ist durch die Wahl eines geeignetes Abstandes zwischen in Richtung der Bogenlinie 63 benachbart angeordneten Schälzähnen 34 gewährleistet, daß die Vorschälvorgänge mittels der Schälzähne 34', 34'' an Umfangsstellen 36' der Umfangsfläche 3 ausgeführt werden, an denen auch tatsächlich Längsnuten gewünscht sind.

Ist die vom Schälzahn 34 bearbeitete Längsnut 14 fertiggestellt, führt das Bearbeitungswerkzeug 24 wiederum eine relative Positionierbewegung 54 durch, um einen Schälzahn 34 des Bearbeitungswerkzeuges 24 in der nächsten Schälposition zum Fertigstellen der nächsten bereits vorgeschälten Längsnut zu positionieren. Im Unterschied zum zuvor beschriebenen Verfahrensablauf ist allerdings vorgesehen, daß es sich bei dem entsprechenden Schälzahn um einen anderen handelt, als denjenigen, der die zuvor eingebrachte Längsnut 14 herausgeschält hat. Der Verfahrensablauf wird insbesondere so gesteuert, daß einer der Schälzähne 34',34'', der dem zuvor in Eingriff gestandenen Schälzahn benachbart ist, in eine neue Schälposition gebracht wird. Dabei ist die neue Schälposition vorzugsweise derjenigen Umfangsstelle 36' zugeordnet, an der der betreffende Schäl-zahn 34',34'' zuvor bereits einen Vorschälvorgang ausgeführt hat. Bei dem sich dann anschließenden Arbeitszyklus wird dann die bereits vorgeschälte Längsnut vollends herausgeschält und fertiggestellt.

Gleichzeitig wird dabei bereits wiederum ein neuer Vorschälvorgang durchgeführt, indem erneut ein dem nunmehr in Haupteingriff stehenden Schälzahn 34' benachbarter Schälzahn ein Stück weit in die Bauteilwandung 22 eingreift und die nächste Längsnut vorschält. Allerdings führt hier nur noch einer der benachbarten Schälzähne einen Vorschälvorgang aus, da sich der andere Schälzahn im Bereich einer bereits fertiggestellten Längsnut befindet. Man kann so über den gesamten Innenumfang der Ausnehmung 4 hinweg eine Mehrzahl von Längsnuten einbringen, wobei das Bearbeitungswerkzeug 24 eine Art Planetenbewegung um die Längsachse 15 der Ausnehmung 4 entlang eines Kreisbogens 55' ausführt.

Das Umpositionieren bezüglich zweier aufeinanderfolgender Schälpositionen geschieht somit auch hier durch kombinierte Verlagerung und Verdrehung des Bearbeitungswerkzeuges 24.

In der Schälposition 53 ist die Achse 37' der Schältiefenrichtung radial ausgerichtet und durchsetzt sowohl die Längsachse 15 der Ausnehmung 4 als auch die Längsachse 27 des Bearbeitungswerkzeuges 24. Um eine neue Schälposition zu erhalten, wird das Bearbeitungswerkzeug 24 durch relative Querbewegungen 43,44 bei außer Eingriff stehenden Schälzähnen 34 so verlagert, daß eine die beiden Längsachsen 15,27 schneidende Radialachse 64 auch die gewünschte neue Umfangsstelle 36' schneidet. Anschließend wird das Bearbeitungswerkzeug 24 um seine als Positionierachse 58 wirkende Längsachse 27 geringfügig zurückgedreht, bis die Achse 37'' der Schnittiefenrichtung des zugeordneten Schälzahnes 34' mit der Radialachse 64 zusammenfällt. Die Drehrichtung der bei der Positionierung stattfindenden Drehbewegung 57' des Bearbeitungswerkzeuges 24 ist somit entgegengesetzt gerichtet zur Verlagerungsrichtung, in der das Bearbeitungswerkzeug 24 um die Längsachse 27 der Ausnehmung 4 bei der Positionierung verfahren wird. Da der Drehwinkel sehr gering ist, kann die Positionierung sehr schnell erfolgen, was die Bearbeitungszeiten reduziert. Außerdem erhöht sich die Lebensdauer des Bearbeitungswerkzeuges, da sich der Verschleiß auf eine große Anzahl von Schälzähnen 34 verteilt.

Es versteht sich, daß zwischen den einzelnen Relativbewegungen zwischen Bearbeitungswerkzeug 24 und Bauteil 2 kein Stillstand auftreten muß, und es kann insbesondere die Positionierung in den einzelnen Schälpositonen im Rahmen eines fließenden Bewegungsablaufes stattfinden.

Sind in einer Ausnehmung 4 mehrere axial aufeinanderfolgende Gruppen von Längsnuten 14 einzubringen, wie dies in Figur 1 anhand zweier Nutengruppen 14 gezeigt ist, kann dies geschehen, ohne das Bearbeitungswerkzeug 24 zwischenzeitlich aus der Ausnehmung 4 herauszunehmen. Auch kann man die beiden Gruppen von Längsnuten 14 nacheinander herstellen oder derart, daß man abwechselnd Längsnuten der einen oder anderen Nutengruppe herausschält, die auf der gleichen axialen Linie liegen.

Durch die geschilderten Verfahren ist praktisch jegliche Art von Nutformen realisierbar, verbunden mit einer hohen Oberflächengüte und einer exakten, reproduzierbaren Formgebung. Man kann das Verfahren auch auf Mehrspindel-Maschinen anwenden, bei denen gleichzeitig mehrere Bearbeitungswerkzeuge gespannt und somit gleichzeitig mehrere Bauteile 2 bearbeitet werden können. In allen Fällen befinden sich jeweils beide stirnseitigen Nutenden im Inneren der Ausnehmung 4 und die radiale Zustellbewegung erfolgt bei gleichzeitiger axialer Verlagerung, so daß sauber in die Bauteilwandung eingefahren und wieder aus dieser ausgefahren wird.

Die einrichtungsmäßigen Kosten zur Verwirklichung des Verfahrens sind minimal, die Funktionalität ist jedoch sehr hoch. Man kann sehr flexibel arbeiten und allein durch Anwendung eines anderen Steuerprogrammes ohne große Umrüstarbeiten und aufweniges Handling verschiedenartige Nutformen realisieren. Aufgrund der exakten Bearbeitung ist ein Überschleifen der Umfangsfläche 3 nicht erforderlich, was sich wiederum vorteilhaft auf die Bearbeitungszeiten auswirkt.

## Patentansprüche

1. Verfahren zum Einbringen wenigstens einer stirnseitig beidseits geschlossenen Längsnut (14) in die eine insbesondere zylindrische Ausnehmung begrenzende Umfangsfläche (3) der Wandung (22) eines Bauteiles (2), beispielsweise eines Bestandteiles eines Servolenkgehäuses (1) für Kraftfahrzeuge, dadurch gekennzeichnet, daß ein mit wenigstens einer als Schälzahn (34) zu verwendenden Eingriffspartie (32) versehenes Bearbeitungswerkzeug (24) von einer stirnseitigen Öffnung (16) der Ausnehmung (4) her ohne Materialeingriff in die Ausnehmung (4) eingeführt wird, und daß zum Einbringen jeder Längsnut (14) ein Schälzahn (34) des Bearbeitungswerkzeuges (24) in den Bereich der mit einer Längsnut (14) zu versehenden Umfangsstelle (36) der Umfangsfläche (3) verbracht und dort wenigstens ein Arbeitszyklus durchgeführt wird, um Rahmen dessen der Schälzahn (34) an der betreffenden Umfangsstelle (36) durch zumindest radiale und axiale Relativbewegungen (42,43,44) zwischen Bearbeitungswerkzeug (24) und Bauteil (2) in axialem Abstand zu der stirnseitigen Öffnung (16) in Eingriff mit der Bauteilwandung (22) gebracht, unter Herausschälen von Material (48) aus der Bauteilwandung (22) längs der Ausnehmung (4) bewegt und noch axial innerhalb der Ausnehmung (4) wieder außer Eingriff mit der Bauteilwandung (22) gebracht wird.

2. Verfahren nach Anspruch 1, dadurch gekennzeichnet, daß zum Einbringen von Längsnuten (14) an mehreren in Umfangsrichtung (35) versetzten Umfangsstellen (36,36') der Umfangsfläche (3) nach Fertigstellung einer Längsnut (14) eine relative Positionierbewegung (54) zwischen Bearbeitungswerkzeug (24) und Bauteil (2) ausgeführt wird, durch die ein Schälzahn (34,34') bezüglich derjenigen Umfangsstelle (36') in einer neuen Schälposition positioniert wird, an der eine weitere Längsnut (14) aus der Bauteilwandung (22) herauszuschälen ist.

3. Verfahren nach Anspruch 2, dadurch gekennzeichnet, daß bei der Positionierbewegung (54) zwischen zwei Schälpositionen eine relative Drehbewegung (57,57') zwischen Bearbeitungswerkzeug (24) und Bauteil (2) um eine in Längsrichtung der Ausnehmung (4) verlaufende Positionierachse (58) stattfindet.

4. Verfahren nach Anspruch 3, dadurch gekennzeichnet, daß die Positionierachse (58) von der Längsachse (27) des Bearbeitungswerkzeuges (24) gebildet ist.

5. Verfahren nach einem der Ansprüche 2 bis 4, dadurch gekennzeichnet, daß bei der Positionierbewegung (54) zwischen zwei Schälpositionen wenigstens eine relative Querbewegung (43,44) zwischen Bearbeitungswerkzeug (24) und Bauteil (2) stattfindet.

6. Verfahren nach einem der Ansprüche 2 bis 5, dadurch gekennzeichnet, daß die relative Positionierbewegung derart ausgeführt wird, daß die jeweils eingenommenen Schälpositionen auf einer Mantellinie liegen, deren Zentrum mit der Längsachse (15) der Ausnehmung (4) zusammenfällt.

7. Verfahren nach einem der Ansprüche 2 bis 6, dadurch gekennzeichnet, daß man zum Einbringen mehrerer über den Umfang der Ausnehmung (4) verteilter Längsnuten (14) ein Bearbeitungswerkzeug (24) verwendet, das über eine Mehrzahl von unter gegenseitigem Abstand auf einer sich um die Längsachse (27) des Bearbeitungswerkzeuges (24) erstreckenden, einen geringeren Radius als die Ausnehmung (4) aufweisenden Bogenlinie (63) angeordneten Schälzähnen (34) verfügt, wobei während des Herausschälens einer Längsnut (14) mittels eines Schälzahnes (34) wenigstens ein diesem Schälzahn (34) benachbarter weiterer Schälzahn (34') ebenfalls in Eingriff mit der Bauteilwandung (22) gelangen kann, um einen Vorschälvorgang durchzuführen.

8. Verfahren nach Anspruch 7, dadurch gekennzeichnet, daß man ein Bearbeitungswerkzeug (24) verwendet, dessen Schälzähne (34) einen Schälzahnkranz bildend angeordnet sind.

9. Verfahren nach Anspruch 7 oder 8, dadurch gekennzeichnet, daß man nach dem Herausschälen einer Längsnut (14) eine relative Positionierbewegung derart durchführt, daß der weitere Schälzahn (34') bezüglich der vorgeschälten Längsnut in die Schälposition gelangt, um in wenigstens einem sich anschließenden Arbeitszyklus mit diesem weiteren Schälzahn (14') die vorgeschälte Längsnut fertigzustellen.

10. Verfahren nach einem der Ansprüche 7 bis 9, dadurch gekennzeichnet, daß auf einer Kreisbogenlinie (63) eine der Anzahl der herzustellenden Längsnuten (14) entsprechende Anzahl von Schälzähnen (34) am Bearbeitungswerkzeug (24) vorgesehen ist.

11. Verfahren nach einem der Ansprüche 1 bis 6, dadurch gekennzeichnet, daß man zum Einbringen mehrerer über den Umfang der Ausnehmung (4) verteilter Längsnuten (14) ein mit nur einem Schälzahn (34) versehenes Bearbeitungswerkzeug (24) verwendet.

12. Verfahren nach einem der Ansprüche 1 bis 11, dadurch gekennzeichnet, daß man die axiale Vorschubrichtung (46) des in Materialeingriff stehenden Schälzahnes (34) so wählt, daß das Bearbeitungswerkzeug (24) eine stoßende oder eine ziehende Bewegung ausführt.

13. Verfahren nach einem der Ansprüche 1 bis 12, dadurch gekennzeichnet, daß man zumindest die bei den Arbeitszyklen auftretenden Relativbewegungen zwischen Bearbeitungswerkzeug (24) und Bauteil (2) durch alleinige Bewegung des Bearbeitungswerkzeuges (24) oder des Bauteiles (2) ausführt.

14. Verfahren nach einem der Ansprüche 1 bis 13, dadurch gekennzeichnet, daß man das Bearbeitungswerkzeug in der horizontal ausgerichteten, zu einer Drehbewegung antreibbaren Werkzeugaufnahme (25) einer Bearbeitungsmaschine festlegt.

15. Verfahren nach einem der Ansprüche 1 bis 14, dadurch gekennzeichnet, daß man während eines Arbeitszyklus durch aufeinander abgestimmte und zeitweise überlagerte Durchführung radialer und axialer Relativbewegungen (42,43,44) zwischen Bearbeitungswerkzeug (24) und Bauteil (2) Einfluß auf die Formgebung der jeweils herauszuschälenden Längsnut (14) nimmt.

16. Verfahren nach Anspruch 15, dadurch gekennzeichnet, daß man über die Nutlänge hinweg unterschiedliche Nuttiefen und/oder Nutquerschnitte vorsieht.

17. Verfahren nach Anspruch 15 oder 16, dadurch gekennzeichnet, daß man über die Nutlänge hinweg eine sich ändernde Form und/oder Breite der in der Umfangsfläche (3) liegenden Nutöffnung (17) vorsieht und beispielsweise eine tropfenähnliche oder keil-ähnliche Nutöffnungskontur hervorruft.

18. Verfahren nach einem der Ansprüche 1 bis 17, dadurch gekennzeichnet, daß der mindestens eine verwendete Schälzahn (34) bezüglich der Längsachse (27) des Bearbeitungswerkzeuges (24) radial nach außen vorsteht.

19. Verfahren nach einem der Ansprüche 1 bis 18, dadurch gekennzeichnet, daß man die Querschnittskontur des verwendeten mindestens einen Schälzahnes (34) so wählt, daß beim Schälvorgang gleichzeitig wenigstens die Längskanten (52) der herausgeschälten Längsnut (14) gebrochen werden.
